Europäisches Patentamt

European Patent Office

Office européen des brevets

(11) Veröffentlichungsnummer: **0 300 194**
**A2**

(12) **EUROPÄISCHE PATENTANMELDUNG**

(21) Anmeldenummer: **88109521.0**

(22) Anmeldetag: **15.06.88**

(30) Priorität: **20.07.87 DE 3723978**

(43) Veröffentlichungstag der Anmeldung:
**25.01.89 Patentblatt 89/04**

(84) Benannte Vertragsstaaten:
**AT BE CH DE ES FR GB IT LI LU NL SE**

(51) Int. Cl.⁴: **B60S 3/04**

(71) Anmelder: **CLEANING SYSTEMS INTERNATIONAL**
**Europalaan 7 Bus 7**
**B-8970 Poperinge(BE)**

(72) Erfinder: **Allaeys, Pierre**
**Provenseweg 50**
**B-8970 Poperinge(BE)**

(74) Vertreter: **Uri, Peter Alexander, Dipl.-Ing. et al**
**Patentanwälte Strohschänk, Uri & Strasser**
**Innere Wiener Strasse 8**
**D-8000 München 80(DE)**

(54) **Bürstenlose Waschanlage.**

㊗ Zur Erzielung einer besseren Reinigungswirkung für die vorderen und hinteren Stirnflächen von Fahrzeugen wird eine bürstenlose Waschanlage mit einer Düsenanordnung zum Aufspritzen von Waschflüssigkeit auf das Fahrzeug, die relativ zum Fahrzeug bewegbar ist und wenigstens eine vertikal angeordnete Düsenreihe umfaßt, in der Weise weitergebildet, daß die vertikal angeordnete Düsenreihe so um das Fahrzeug herum bewegbar und dabei um eine vertikale Achse drehbar ist, daß mit ihr wenigstens eine Seitenfläche und wenigstens eine der vorderen und hinteren Stirnflächen des Fahrzeugs angespritzt werden können.

Fig. 1

EP 0 300 194 A2

## Bürstenlose Waschanlage

Die Erfindung betrifft eine bürstenlose Waschanlage für Fahrzeuge, insbesondere für Kraftfahrzeuge der im Oberbegriff von Anspruch 1 genannten Art.

Eine solche Waschanlage ist beispielsweise der DE-PS 29 43 888 entnehmbar, in der ein Portal beschrieben wird, das die Düsenanordnung zum Aufspritzen von Waschflüssigkeit auf das Fahrzeug trägt. Dabei umfaßt die Düsenanordnung zwei vertikal angeordnete, an den Säulen des Portals angebrachte Düsenreihen und eine horizontal angeordnete Düsenreihe, die am Querbalken des Portals vorgesehen ist. Das Portal kann hin- und herfahrend oder aber auch feststehend ausgebildet sein. Im letzteren Fall müssen dann die zu reinigenden Fahrzeuge während des Waschvorganges durch das Portal hindurchfahren. Gemäß dem Stand der Technik können auch mehrere solche Portale hintereinander angeordnet sein.

Der Nachteil dieser bekannten Anlagen besteht darin, daß sie im wesentlichen nur in Längsrichtung des zu waschenden Fahrzeuges arbeiten, was zu einer mangelhaften Reinigung der vorderen und hinteren Stirnflächen des Fahrzeugs führt. Bekanntlich wird in der Praxis versucht, diesem Mangel dadurch zu begegnen, daß die betroffenen Fahrzeugbereiche meist vor dem Einfahren des Fahrzeugs in die eigentliche Waschanlage vermittels einer von Hand geführten Wasserdampflanze oder einer ähnlichen manuell bedienten Waschvorrichtung zusätzlich gereinigt werden. Dies ist in nachteiliger Weise mit einem im Vergleich zum eigentlichen Waschvorgang nicht unerheblichen Zeit- und Personalkosten-Aufwand verbunden.

Demgegenüber liegt der Erfindung die Aufgabe zugrunde, eine bürstenlose Waschanlage der eingangs genannten Art so weiterzubilden, daß mit ihr eine einwandfreie Reinigung auch der vorderen und hinteren Stirnflächen eines Kraftfahrzeuges möglich ist, ohne daß eine zusätzliche, von Hand zu bedienende Waschvorrichtung eingesetzt werden muß.

Zur Lösung dieser Aufgabe sieht die Erfindung die im Anspruch 1 zusammengefaßten Merkmale vor.

Durch diese erfindungsgemäßen Maßnahmen wird es möglich, eine sich in vertikaler Richtung erstreckende Düsenreihe nicht nur seitlich an dem zu reinigenden Fahrzeug entlangzuführen, sondern diese Düsenreihe sich auch vor und/oder hinter dem Fahrzeug quer zu dessen Längsrichtung zumindest im wesentlichen über die gesamte Fahrzeugbreite so bewegen zu lassen, daß die Düsen den zu reinigenden Fahrzeug-Stirnflächen zugewandt sind und diese mit Waschflüssigkeit besprühen.

Dabei ist es prinzipiell möglich, beispielsweise zwei solcher vertikaler Düsenreihen vorzusehen, die entweder miteinander gekoppelt oder voneinander unabhängig während des Waschvorganges so gesteuert und geführt werden, daß sich die eine beispielsweise an der linken und der hinteren Fahrzeugseite entlangbewegt, während die andere die Reinigung der rechten und nach vorne weisenden Fahrzeugflächen übernimmt.

Vorzugsweise ist jedoch nur eine einzige sich in Vertikalrichtung erstreckende Düsenanordnung vorgesehen, die so zumindest auf einer nahezu geschlossenen Bahn um das gesamte Fahrzeug herum bewegt werden kann, daß sie sämtliche Fahrzeugseiten- und Vorder- bzw. Hinterflächen mit Waschflüssigkeit bespritzt. Vorzugsweise erfolgt die Bewegung dieser einen vertikalen Düsenreihe auf einer geschlossenen Bahn, die zur Erhöhung der Reinigungswirkung bei einem Waschvorgang mehrfach durchlaufen werden kann. Dabei kann vorzugsweise zur Erhöhung der Reinigungswirkung auch einmal oder mehrfach eine Umkehr der Bewegungsrichtung erfolgen, so daß die vertikale Düsenreihe bzw. die vertikalen Düsenreihen sowohl in der einen als auch in der entgegengesetzten Richtung ganz oder teilweise um das zu reinigende Fahrzeug herumgeführt werden. In jedem Fall werden gemäß der Erfindung die vertikal angeordnete Düsenreihe bzw. Düsenreihen bei der Bewegung un das Fahrzeug herum um eine vertikale Achse so gedreht, daß die Düsen dem zu reinigenden Fahrzeug zugewendet bleiben.

Um die vertikal angeordnete Düsenreihe bequem um das zu reinigende Fahrzeug herum bewegen zu können, ist vorzugsweise eine Tragvorrichtung vorgesehen, die in einer im wesentlichen horizontalen Ebene entweder über dem zu reinigenden Fahrzeug oder unter dem Boden der Waschanlage so verschoben wird, daß die an ihr aufgehängte bzw. von ihr getragene Düsenreihe die gewünschte Bewegungsbahn durchläuft.

Erfindungsgemäß kann das Durchlaufen einer zumindest nahezu geschlossenen Bewegungsbahn auf zwei grundsätzlich verschiedene Weisen erreicht werden. Die eine Möglichkeit besteht darin, daß die Bewegungsbahn durch eine einzige fest montierte Schiene vorgegeben wird, längs derer sich die Tragvorrichtung der vertikalen Düsenreihe mit nur einem einzigen Freiheitsgrad vor- bzw. zurückbewegen kann. Die Abmessungen dieser Schiene sowohl in Längs- als auch in Querrichtung der zu waschenden Fahrzeuge müssen dann so gewählt werden, daß sich die vertikale Düsenreihe um das größte in einer solchen Anlage zu waschende Fahrzeug, wenn dieses in ordnungsgemäßer Weise in der Waschanlage positioniert worden ist, so herumbewegen kann, daß es zu keinerlei Kollisionen kommt.

Da eine solche Waschanlage im allgemeinen nicht nur für eine einzige Fahrzeuggröße Verwendung finden soll, kann sich bei einer solchen an eine feste Schiene gebundenen Bewegungsart der Tragvorrichtung dann ein Problem ergeben, wenn in der Anlage Fahrzeuge gewaschen werden sollen, die wesentlich kleiner, insbesondere wesentlich kürzer als die größten in der Anlage waschbaren Fahrzeuge sind. Nimmt man beispielsweise an, daß alle in der Anlage zu waschenden Fahrzeuge vor dem Waschvorgang immer sc positioniert sind, daß sich ihre vordere Stirnfläche in einem solchen Abstand hinter dem vorderen in Querrichtung verlaufenden Teil der Bewegungsbahn der vertikalen Düsenanordnung befindet,. daß sich hier ebenso wie an den Seitenflächen eine optimale Reinigungswirkung erzielen läßt, dann kann bei sehr kurzen Fahrzeugen der Abstand der hinteren Stirnfläche von dem hinteren quer verlaufenden Teil der Bewegungsbahn so groß sein, daß sich hier ohne zusätzliche Maßnahmen keine gute Reinigungswirkung mehr erzielen läßt.

Zur Überwindung dieser Schwierigkeit ist erfindungsgemäß vorgesehen, daß die vertikal angeordnete Düsenreihe wenigstens zwei Düsengruppen umfaßt, von denen jede untereinander gleiche Düsen aufweist, von denen aber die eine für eine kleinere und die andere für eine größere Reinigungsweite ausgebildet ist. Unter Reinigungsweite wird dabei der horizontale Abstand verstanden, den eine zu reinigende Fläche von der Düsenreihe besitzen muß, damit eine optimale Reinigungswirkung erzielt wird.

Erfindungsgemäß können diese unterschiedlichen Reinigungsweiten durch eine oder mehrere der folgenden Maßnahmen erzielt werden:

1. Die Düsen derjenigen Düsengruppe, die die größere Reinigungsweite aufweisen soll, werden mit einem größeren gegenseitigen Vertikalabstand angeordnet, als die Düsen der Düsengruppe mit der kleineren Reinigungsweite.

2. Der Öffnungswinkel des Spritzkegels der Düsen mit der größeren Reinigungsweite wird kleiner gewählt als der Öffnungswinkel des Spritzkegels der Düsen mit der kleineren Reinigungsweite.

3. Die Düsen mit der größeren Reinigungsweite werden für einen größeren . Waschflüssigkeits-Durchsatz ausgelegt als die Düsen mit der kleineren Reinigungsweite.

Diesen Maßnahmen liegt die Erkenntnis zugrunde, daß eine optimale Reinigungswirkung in dem horizontalen Abstandsbereich erzielt wird, in dem sich die Spritzkegel der einander benachbarten und gleichzeitig arbeitenden Düsen zu überschneiden beginnen. Durch die oben genannten Maßnahmen hat dieser Über schneidungsbereich für die Düsen der einen Gruppe einen größeren Abstand von der vertikalen Düsenreihe als für die Düsen der anderen Gruppe.

Vorzugsweise werden die beiden Düsengruppen jeweils durch eine eigene Waschflüssigkeitsleitung mit Waschflüssigkeit versorgt und alternierend betrieben.

Auf diese Weise lassen sich Längenunterschiede zwischen dem größten und dem kleinsten durch eine solche Anlage gut zu reinigenden Fahrzeug in der Größenordnung von 2 bis 2,5 m ohne weiteres überbrücken. Dies geschieht z.B. in der Weise, daß die Fahrzeuge unabhängig von ihrer Länge immer so positioniert werden, daß sich ihre vorderste Stirnfläche in einem Abstand vom quer verlaufenden Teil der Bewegungsbahn der vertikalen Düsenreihe befindet, der der Reinigungsweite der Düsengruppe mit der kleineren Reinigungsweite entspricht. Bei großen Fahrzeugen kann dann ausschließlich diese Düsengruppe zur Reinigung sämtlicher Fahrzeugseiten- und vorderen und hinteren Stirnflächen verwendet werden.

Bei kleineren Fahrzeugen dagegen werden nur die Seitenflächen und die vordere Stirnfläche mit der eben genannten Düsengruppe gereinigt. Zur Reinigung der hinteren Stirnfläche wird demgegenüber auf die Düsengruppe mit der größeren Reinigungsweite umgeschaltet. Zweckmäßigerweise erfolgt dieses Umschalten nicht erst dann, wenn die vertikale Düsenreihe bei ihrer Bewegung um das Fahrzeug herum auf den hinter dem Fahrzeug quer verlaufenden Teil ihrer Bewegungsbahn eingeschwenkt ist sondern bereits vorher, während sie sich noch entlang einer der Seitenflächen bewegt. Auch das Zurückschalten auf die Düsengruppe mit der kürzeren Reinigungsweite erfolgt vorzugsweise nicht sofort bei Verlassen des hinteren quer verlaufenden Teils der Bewegungsbahn sondern erst dann, wenn die vertikale Düsenreihe sich bereits längs der anderen Seitenfläche wieder etwas nach vorne bewegt hat.

Die Länge des Fahrzeuges kann dabei jeweils mit Hilfe einer entsprechend positionierten Sensoranordnung gemessen werden. Dabei ist es nicht erforderlich, die Fahrzeuglänge in jedem Einzelfall genau zu bestimmen. Vielmehr wird vorzugsweise ein Fahrzeuglängen-Grenzwert vorgegeben, bei dessen Überschreiten nur mit der Düsengruppe mit der kleineren Reinigungsweite gearbeitet wird, während bei seinem Unterschreiten die Umschaltung von der einen Düsengruppe auf die andere und gegebenenfalls wieder zurück erfolgt. Das Umschalten von einer Düsengruppe auf die andere kann beispielsweise durch geeignet positonierte Kontakte ausgelöst werden, die die vertikale Düsenreihe oder ihre Tragvorrichtung beim Durchlaufen der Bewegungsbahn betätigt.

Der Längen-Grenzwert kann beispielsweise so festgelegt werden, daß ausschließlich mit der Düsengruppe mit der kleineren Reinigungsweite gearbeitet wird, wenn die Gesamtlänge des zu reinigenden Fahrzeugs zwischen 4,5 und 5,5 m liegt,und daß umgeschaltet wird, wenn das zu reinigende Fahrzeug kürzer als 4,5 m ist.

Eine weitere Möglichkeit die Tragvorrichtung und damit die vertikale Düsenreihe zumindest auf einer nahezu geschlossenen Bahn um das zu reinigende Fahrzeug herumzuführen, besteht darin, die Tragvorrichtung in einer im wesentlichen horizontalen Ebene, die sich dann aber immer über dem Fahrzeug befindet, so zu lagern und zu führen, daß sie mit zwei Freiheitsgraden, beispielsweise in einer sich quer zum Fahrzeug erstreckenden X-Richtung und in einer hierzu senkrechten, d.h. sich in Fahrzeuglängsrichtung erstreckenden Y-Richtung frei hin- und herbewegt werden kann. In diesem Fall ist es allerdings erforderlich, die vertikale Düsenreihe an der Tragvorrichtung mit Hilfe einer Drehvorrichtung aufzuhängen, die eine Drehung der Düsenreihe um eine vertikale Achse ermöglicht, damit die Spritzrichtung der Düsen immer dem zu reinigenden Fahrzeug zugewendet bleibt.

Bei dem oben beschriebenen Umlaufen auf einer zumindest nahezu geschlossenen Schiene ergibt sich diese Drehung durch die auf sich selbst zurückführende Krümmung der Führungsschiene von selbst. Bei einer freien Hin- und Herbewegung in einer X-und einer Y-Richtung muß diese Drehbewegung zusätzlich ermöglicht werden. Dafür hat diese zuletzt genannte Ausführungsform den Vorteil, daß mit ihr innerhalb der Grenzen der Gesamtabmessung der Waschanlage beliebig große und beliebig geformte geschlossene oder nahezu geschlossene Bewegungsbahnen ein- oder mehrfach durchlaufen werden können, wobei die Umlaufrichtung ebenfalls einmal oder mehrfach umgekehrt werden kann. Es genügt hier also eine einzige Düsenart mit einer einzigen Reinigungsweite vorzusehen und die vertikale Düsenanordnung so zu steuern, daß ihr Abstand von den zu reinigenden Fahrzeugoberflächen immer dieser Reinigungsweite entspricht. Eine Waschanlage der zuletzt genannten Art ist insbesondere für Lastkraftwagen und Omnibusse geeignet, bei denen Längenunterschiede bis zu 12 m auftreten können.

Bei beiden Ausführungsformen kann es zweckmäßig sein, zusätzlich zur vertikalen Düsenreihe auch noch eine sich in horizontaler Richtung erstreckende, über dem zu reinigenden Fahrzeug angeordnete Düsenreihe vorzusehen, um eine noch bessere Reinigungswirkung für die horizontal verlaufenden Flächen des jeweiligen Fahrzeuges zu erreichen. Da diese Flächen in sehr unterschiedlichen Höhen angeordnet sein können, kann es für beide Grundformen einer erfindungsgemäßen Waschanlage vorteilhaft sein, für die horizontale Düsenreihe zumindest zwei Düsengruppen mit unterschiedlichen Reinigungsweiten vorzusehen und in Abhängigkeit vom Abstand von der zu reinigenden Fläche alternierend zu betreiben, wie dies oben für die im wesentlichen vertikalen Fahrzeugflächen beschrieben wurde.

Alternativ oder ergänzend hierzu ist es auch möglich, die horizontale Düsenreihe so an der Tragvorrichtung zu montieren, daß ihre vertikale Höhe verstellbar ist. Mit entsprechenden Sensoren wird dann die Höhe der horizontalen Fahrzeugfläche bzw. Flächen erfaßt und die vertikale Höhe der horizontalen Düsenreihe beim Bearbeiten dieser Fahrzeugflächen so gesteuert, daß sich eine optimale Reinigungswirkung ergibt.

Bei beiden Grundformen kann die Düsengruppe bei ihrem Umlauf um das zu reinigende Fahrzeug entweder von Hand oder vollautomatisch gesteuert werden. Im letzteren Fall müssen dann entsprechende Sensor-, Speicher- und Steuervorrichtungen vorhanden sein, die die Größe des zu waschenden Fahrzeuges ausmessen, die Meßwerte speichern und aus den gespeicherten Werten ein entsprechendes Fahrprogramm für die Düsenanordnung ableiten, das insbesondere sicherstellt, daß es zu keinen Kollisionen kommt. Derartige Sensor-, Speicher- und Steueranlagen sind dem Fachmann ohne weiteres bekannt und müssen daher hier nicht im einzelnen beschrieben werden.

Vorteilhafte Weiterbildungen der erfindungsgemäßen Waschanlage sind in den Unteransprüchen niedergelegt.

Die Erfindung wird im folgenden anhand von Ausführungsbeispielen unter Bezugnahme auf die Zeichnung beschrieben; in dieser zeigt:

Fig. 1 eine erste Ausführungsform einer erfindungsgemäßen Waschanlage, bei der die Tragvorrichtung für die vertikal angeordnete Düsenreihe beim Waschvorgang auf einer durch eine Schiene fest vorgegebenen ringförmig geschlossenen Bahn um das zu waschende Fahrzeug herumgeführt werden kann, und

Fig. 2 eine zweite Ausführungsform einer erfindungsgemäßen Waschanlage, bei der die Tragvorrichtung für die vertikal angeordnete Düsenreihe in einer horizontalen Ebene in zwei aufeinander senkrecht stehenden Richtungen frei verschiebbar angeordnet ist.

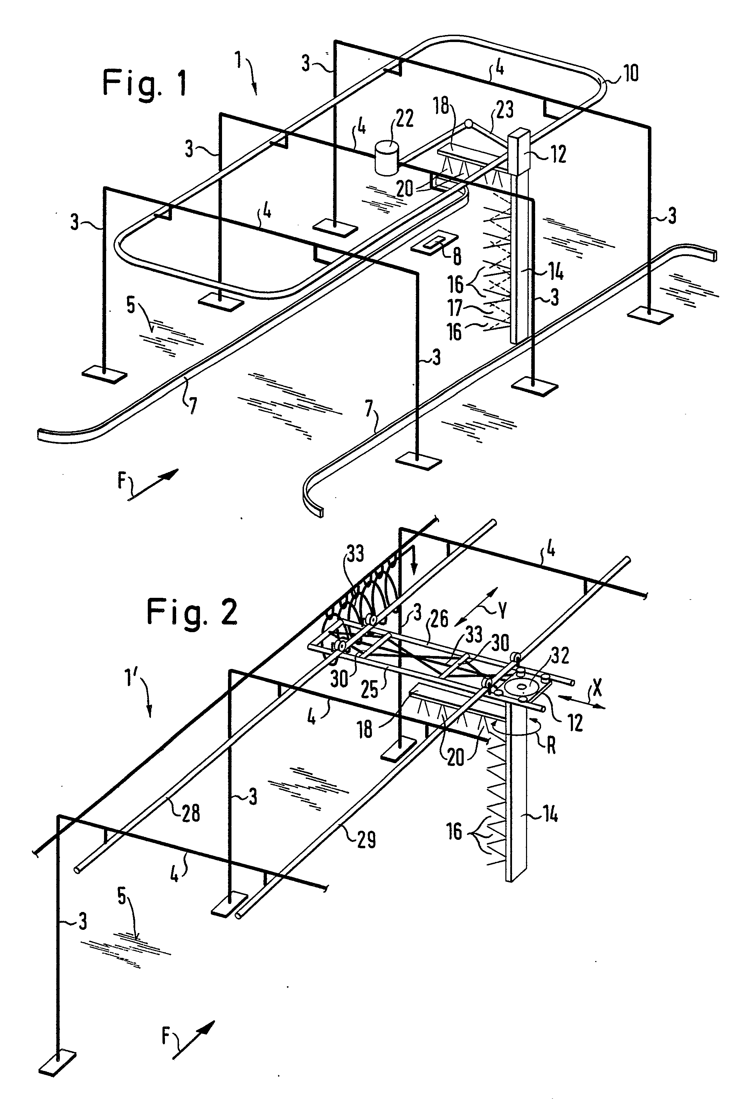

Die in Fig. 1 wiedergegebene Waschanlage 1 ist an einem Rahmengestell aufgehängt, das sechs Säulen 3 umfaßt, die paarweise einander gegenüber angeordnet und durch Querträger 4 miteinander verbunden sind. Die drei auf diese Weise gebildeten Portale sind fest mit dem Boden 5 verbunden und mit gegenseitigen Abständen so hintereinander angeordnet, daß ihre Lichtraumprofile miteinander fluchten. Die Höhe der Säulen 3 und die Länge der Querträger 4 sind so bemessen, daß die zu waschenden Fahrzeuge in Richtung des Pfeiles F in den von den drei Portalen 3, 4, 3 umschlossenen Raum, der im folgenden kurz als Waschbereich bezeichnet wird, einfahren können, wobei sie jeweils durch die beiden Schienen 7 geführt werden, die in geringer Höhe über dem Boden 5 angeordnet sind.

Auf dem Boden des Waschbereiches ist in seiner in Richtung des Pfeiles F gesehen hinteren linken Ecke eine Kontaktvorrichtung 8 angeordnet, die ein Signal erzeugt, wenn auf sie durch das linke Vorderrad eines eingefahrenen Fahrzeuges ein Druck ausgeübt wird. Dieses Signal wird dazu verwendet, dem Fahrer des Fahrzeuges anzuzeigen, daß das Fahrzeug die vorgesehene Waschposition erreicht hat und angehalten werden muß.

An der Unterseite der Querträger 4 ist eine Schiene 10 aufgehängt, die eine geschlossene Bahn in Form eines langgestreckten Rechteckes mit abgerundeten Ecken bildet, wobei die Längsrichtung dieses Rechteckes mit der Richtung des Pfeiles F und somit mit der Längsrichtung des jeweils zu waschenden Fahrzeuges übereinstimmt.

Auf der Schiene 10 ist eine Tragvorrichtung 12 gelagert, die sich, beispielsweise durch einen Elektromotor angetrieben, an der Schiene 10 entlangbewegen und somit eine durch die Schiene 10 vorgegebene geschlossene Bahn durchlaufen kann. Diese Tragvorrichtung 12 kann beispielsweise von einem laufkatzenartigen Wagen oder einem Schlitten oder dergleichen gebildet werden und der Elektromotor kann als Linearmotor ausgebildet sein.

Ausgehend von der Tragvorrichtung 12 erstreckt sich vertikal nach unten ein Düsentragarm 14 bis knapp über den Boden 5.

Auf der Seite des Düsentragarmes 14, die dem Inneren des Raumvolumens zugewandt ist, das der Düsentragarm 14 bei einer vollen Umlaufs-Bewegung der Tragvorrichtung 12 auf der Schiene 10 umschreibt, ist eine vertikal angeordnete Düsenreihe vorgesehen, die in Fig. 1 nur mittelbar durch die von den betreffenden Düsen bei Beaufschlagung mit Waschflüssigkeit ausgehenden Sprüh- bzw. Spritzkegel 16, 17 wiedergegeben ist. Der besseren Übersichtlichkeit halber sind nur einige wenige Spritzkegel 16 bzw. 17 dargestellt; tatsächlich kann der Düsentragarm 14 eine wesentlich größere Anzahl von Düsen aufweisen. Es ist erfindungsgemäß nicht unbedingt erforderlich, daß diese Düsen alle exakt auf einer vertikal verlaufenden Geraden auf der Innenseite des Düsentragarms 14 angeordnet sind. Der Begriff "Düsenreihe"' wie er hier Verwendung findet, soll auch eine Zickzack-Anordnung oder andere Düsenanordnungen umfassen, solange diese eine im wesentlichen vertikale Erstreckung besitzen.

Die in Fig. 1 mit vollen Linien dargestellten Spritzkegel 16 gehören zu einer ersten Düsengruppe, deren Düsen in vertikaler Richtung voneinander einen größeren Abstand aufweisen als die Düsen einer zweiten Düsengruppe, von denen die in Fig. 1 mit gestrichelten Linien wiedergegebenen Spritzkegel 17 ausgehen. Die Spritzkegel 16 besitzen einen kleineren Öffnungswinkel als die Spritzkegel 17, was in Verbindung mit den unterschiedlichen vertikalen Abständen der jeweiligen Düsen zur Folge hat, daß sich die von den Düsen der ersten Düsengruppe ausgehenden Waschflüssigkeitskegel in einem größeren Abstand vom Düsentragarm 14 zu überschneiden beginnen als die Waschflüssigkeitskegel, die von den Düsen der zweiten Düsengruppe abgegeben werden.

Im Betrieb werden die beiden Düsengruppen alternativ mit Waschflüssigkeit beaufschlagt, d.h. es spritzen entweder die Düsen mit den Spritzkegeln 16 oder die Düsen mit den Spritzkegeln 17. Welche der beiden Düsengruppen zu einem gegebenen Zeitpunkt Verwendung findet, hängt vom Abstand des vertikalen Düsentragarms 14 von der zu waschenden Fahrzeug-Oberfläche ab. Dies wird weiter unten noch näher erläutert.

Die Tragvorrichtung 12 trägt weiterhin einen sich im Bereich des oberen Endes des vertikalen Düsentragarms 14 horizontal erstreckenden Düsentragarm 18, dessen Düsen in Fig. 1 ebenfalls nur durch die von ihnen ausgehenden, sich vertikal nach unten erstreckenden Spritzkegel 20 symbolisiert sind. Die Spritzkegel 20 besitzen in Fig. 1 einen kleinen Öffnungswinkel, der in etwa dem Öffnungswinkel der Spritzkegel 16 entspricht. Tatsächlich kann der horizontale Düsentragarm 18 aber ebenfalls zwei oder mehr verschiedene Düsengruppen aufweisen, die sich voneinander durch den Öffnungswinkel der von ihnen ausgehenden Spritzkegel unterscheiden. Auch diese Düsengruppen werden nur alternativ verwendet, je nachdem wie weit die zu waschende Fahrzeug-Oberfläche vom horizontalen Düsentragarm 18 entfernt ist. Alternativ oder ergänzend hierzu kann eine Veränderbarkeit der vertikalen Höhe des horizontalen Düsentragarms vorgesehen werden, die dann so gesteuert wird, daß sich eine möglichst gute Reinigungswirkung ergibt.

Die Waschflüssigkeitszufuhr zu den beiden Düsentragarmen 14 und 18 erfolgt von einer nicht dargestellten Hochdruckpumpe über eine ebenfalls nicht dargestellte Leitung zu einem zentralen Verteiler 22 und von dort weiter über eine mit der Tragvorrichtung 12 verbundene Leitungsanordnung 23, deren eines Ende mit dem Verteiler 22 verbunden ist und deren anderes Ende sich mit der Tragvorrichtung 12 bei deren Bewegung auf der Schiene 10 zu jedem beliebigen Punkt mitbewegen kann. Da, wie oben erwähnt, die verschiedenen Düsengruppen alternativ mit Waschflüssigkeit versorgt werden, ist in den Düsentragarmen 14, 18 eine entsprechende Anzahl von verschiedenen Zuführ-Leitungen vorgesehen, die durch entsprechende, elektrisch gesteuerte Ventile mit der Leitungsanordnung 23 verbunden bzw. von ihr getrennt werden können.

Zum Betrieb wird zunächst das zu waschende Fahrzeug so weit in den Waschbereich hineingefahren, bis sein linkes Vorderrad die Kontaktvorrichtung 8 berührt. Diese Kontaktvorrichtung 8 ist genügend weit hinter dem vorderen, quer zur Richtung des Pfeiles F verlaufenden Teil der Schiene 10 plaziert, daß der vertikale Düsentragarm 14 auch dann mit einem ausreichenden Sicherheitsabstand vor dem zu waschenden Fahrzeug herumgeführt werden kann, wenn dieses eine über die Vorderräder hinaus vorspringende Kühlerhaube oder dergleichen besitzt. Es ist klar, daß die Länge der Schiene 10 in Richtung des Pfeiles F bzw. der in dieser Richtung gemessene Abstand der beiden quer verlaufenden Teile der Schiene 10 die maximale Länge der Fahrzeuge definiert, die in einer solchen Waschanlage gewaschen werden können. Besitzt das Fahrzeug in etwa diese maximale Länge oder ist es nur um ein bis zwei Meter kürzer, so bleiben während des gesamten Waschvorganges, während dessen die Tragvorrichtung 12 einmal oder mehrfach, gewünschtenfalls auch wechselweise vorwärts und rückwärts auf der Schiene 10 umläuft, so daß der vertikale Düsentragarm 14 das Fahrzeug entsprechend häufig umkreist, ständig die Düsen der zweiten Düsengruppe eingeschaltet. Wie bereits erwähnt, besitzen diese Düsen einen etwas geringeren Abstand als die Düsen der ersten Düsengruppe und einen größeren Öffnungswinkel des von ihnen abgegebenen Waschflüssigkeitskegels. Dadurch, ist der Abstand, in dem sich diese Waschflüssigkeitskegel zu überschneiden beginnen und in welchem eine optimale Reinigungswirkung erzielbar ist, vergleichsweise nahe am vertikalen Düsentragarm 14, was den während des gesamten Umlaufes vergleichsweise geringen Abständen der zu waschenden Fahrzeugoberflächen von diesem Düsentragarm 14 entspricht.

Ist das zu waschende Fahrzeug wesentlich, beispielsweise mehr als 2 bis 2,5 m kürzer als der in Pfeilrichtung F gesehene Abstand der quer verlaufenden Teile der Schiene 10, so wird beim Waschen des Frontbereiches und der vorderen Seitenbereiche dieses Fahrzeuges ebenfalls die zweite Düsengruppe mit der kleineren Reinigungsweite verwendet. Bewegt sich aber die Tragvorrichtung 12 beim Umkreisen des zu waschenden Fahrzeuges nach hinten über den Bereich des mittleren Stützenportals 3, 4, 3 hinaus, so wird auf die erste Düsengruppe mit den größeren Abständen zwischen den Düsen und den kleineren Öffnungswinkeln der Waschflüssigkeitskegel 16 umgeschaltet. Dadurch wird der im vorliegenden Zusammenhang als Reinigungsweite bezeichnete horizontale Abstand vom Tragarm 14 der Punkte, in denen sich die Waschflüssigkeitskegel zu überschneiden beginnen, vergrößert, wodurch der größere Abstand zwischen den zu reinigenden Fahrzeugoberflächen und dem Düsentragarm ausgeglichen wird.

Sowohl das Herumführen der Tragvorrichtung 12 und des Düsentragarmes 14 um das zu waschende Fahrzeug als auch gegebenenfalls das Umschalten von einer Düsengruppe auf die andere kann entweder durch eine Bedienungsperson oder vollautomatisch gesteuert werden. Im letzteren Fall ist eine in der Fig. 1 nicht dargestellte Sensoranordnung vorgesehen, mit deren Hilfe die Länge des zu waschenden Fahrzeuges gemessen wird. Das Startsignal für diese Sensorvorrichtung wird durch das Signal gebildet bzw. ausgelöst, das die Kontaktvorrichtung 8 abgibt, wenn das linke Vorderrad des zu waschenden Fahrzeuges auf die Kontaktvorrichtung 8 Druck ausübt. Stellt die Sensorvorrichtung fest, daß das Fahrzeug so lang ist, daß ausschließlich mit der zweiten Düsengruppe mit der kleinen Reinigungsweite gearbeitet werden kann, so wird diese Düsengruppe eingeschaltet und während des gesamten Waschvorganges mit Waschflüssigkeit versorgt. Stellt die Sensorvorrichtung dagegen fest,daß das Fahrzeug wesentlich kürzer ist, so wird durch eine entsprechende automatische Steuervorrichtung von der einen Düsengruppe auf die andere umgeschaltet, wenn der Düsentragarm 14 durch die Tragvorrichtung 12 in einen Bereich gefahren wird, in welchem mit einer zunehmenden Vergrößerung des Abstandes zwischen den zu reinigenden Fahrzeugoberflächen und der Innenseite des vertikalen Düsentragarms 14 gerechnet werden muß.

In entsprechender Weise können auch unterschiedliche Reinigungsweiten besitzende Düsengruppen im horizontalen Düsentragarm 18 entweder manuell oder automatisch ein- bzw. ausgeschaltet werden, wenn sich die Abstände zwischen der Unterseite des horizontalen Düsentragarmes 18 und den zu reinigenden Fahrzeugoberflächen verändern. Auch diese Abstandsänderungen können durch eine in der Fig. 1 nicht dargestellte Sensoreinrichtung gemessen werden. Ergänzend oder alternativ hierzu ist es auch möglich, die vertikale Höhe des horizontalen Düsentragarms 18 variabel zu gestalten und mit Hilfe der von der eben erwähnten Sensoreinrichtung abgegebenen Signale in Bezug auf die momentan zu waschende Fahrzeugoberfläche so zu steuern, daß eine optimale Reinigungswirkung erzielt wird. Diese Höhensteuerung kann auch von einer Bedienungsperson entweder nach Augenschein oder unter Zuhilfenahme der Ausgangssignale der Sensoreinrichtung durchgeführt werden.

Bei der in Fig. 2 wiedergegebenen Ausführungsform ist die Waschanlage 1 wieder an einem Rahmengestell aufgehängt, das von drei in Richtung des Pfeiles F hintereinander angeordneten Portalen gebildet wird, von denen jedes aus zwei Säulen 3 und einem Querträger 4 besteht. Allerdings sind von den Säulen 3 nur die in Richtung des Pfeiles F gesehen linken Säulen wiedergegeben, um eine bessere Übersichtlichkeit der Darstellung zu erzielen. Auch die in Fig. 1 dargestellten Führungsschienen 7 sind hier weggelassen, doch können sie bei dieser Ausführungsform ebenso vorhanden sein. Das gleiche gilt für die Kontaktvorrichtung 8.

Der wesentliche Unterschied zur Ausführungsform nach Fig. 1 besteht darin, daß die Tragvorrichtung 12 für die in gleicher Weise wie in Fig. 1 angeordneten vertikalen und horizontalen Düsentragarme 14 und 18 nicht auf einer nur einen einzigen Freiheitsgrad ermöglichenden, ringförmig geschlossenen Schiene 10 gelagert ist. Vielmehr ist hier die Tragvorrichtung 12 zwischen zwei Schienen 25, 26 gelagert, die sich zueinander parallel senkrecht zur Richtung des Pfeiles F quer über den gesamten Waschbereich erstrecken. Längs dieser Schienen 25, 26 ist die Tragvorrichtung 12 in Richtung des Doppelpfeiles X beispielsweise mit Hilfe eines Elektromotors oder einer anderen entsprechenden Antriebsvorrichtung frei hin- und herverschiebbar. Die Schienen 25, 26 sind ihrerseits auf zwei Schienen 28, 29 gelagert, die an den Querträgern 4 so fest montiert sind, daß sie sich parallel zueinander in Richtung des Pfeiles F über die gesamte Länge des Waschbereiches erstrecken. Die Schienen 25, 26 sind durch kurze Stege 30 miteinander starr verbunden und können so gemeinsam mit der Tragvorrichtung 12 als geschlossene Einheit mit Hilfe eines nicht dargestellten Antriebsmotors in Richtung des Doppelpfeils Y längs der Schienen 28, 29 hin- und herverschoben werden.

Auf diese Weise ist es möglich, die Tragvorrichtung 12 und mit ihr die Düsentragarme 14 und 18 stufenlos zu jedem beliebigen Punkt des Waschbereiches zu verschieben. Es stehen somit zwei Freiheitsgrade in X- und Y-Richtung zur Verfügung und die Tragvorrichtung 12 kann innerhalb der durch die Abmessungen der Gesamtanlage gegebenen Maximalwerte beliebig geformte Bahnkurven beliebiger Größe durchlaufen. Im allgemeinen wird man die Tragvorrichtung 12 wieder so steuern, daß sie eine geschlossene Bahnkurve einmal oder mehrfach mit gleichbleibender oder wechselnder Bewegungsrichtung so durchläuft, daß sie dabei jeweils vollständig um das zu waschende Fahrzeug herumgeführt wird. Anders als bei dem Ausführungsbeispiel nach Fig. 1 erfolgt hierbei aber keine automatische Drehung des vertikalen Düsentragarms 14 um eine vertikale Achse, so daß hier eine zusätzliche Drehvorrichtung 32 vorgesehen ist, mit deren Hilfe der Düsentragarm 14 in Richtung des Doppelpfeils R um eine vertikale Achse gedreht werden kann und die so gesteuert wird, daß seine Düsen immer dem zu waschenden Fahrzeug zugewendet sind.

Dadurch, daß bei dem in Fig. 2 dargestellten Ausführungsbeispiel die Tragvorrichtung 12 an jeden beliebigen Punkt der den Waschbereich überdeckenden horizontalen Ebene gebracht werden kann, können mit einer derartigen Anlage Fahrzeuge mit extrem unterschiedlicher Länge und/oder Breite gewaschen werden, ohne daß Düsengruppen mit unterschiedlichen Reinigungsweiten verwendet werden müssen. Es genügt hier, eine einzige Reinigungsweite vorzusehen und den vertikalen Düsentragarm 14 immer so nahe an die jeweils zu reinigende Fahrzeugoberfläche heranzuführen, daß diese mit optimaler Wirkung gereinigt wird.

Die Steuerung der Bewegung der Tragvorrichtung 12 und damit der Düsentragarme 14 und 18 kann, wie oben in Verbindung mit dem Ausführungsbeispiel nach Fig. 1 geschildert, entweder manuell oder vollautomatisch erfolgen. In letzterem Fall müssen dann wieder Sensoren und eine zugehörige Steuereinrichtung vorgesehen sein, die die Position und Abmessungen des zu waschenden Fahrzeuges ermitteln und sicherstellen, daß der Düsentragarm 14 in dem der optimalen Reinigungsweite entsprechenden Abstand um das Fahrzeug herumgeführt wird ohne mit diesem zu kollidieren. Auch hier kann in der oben geschilderten Weise der horizontale Düsentragarm in seiner vertikalen Höhe verstellbar sein.

Die Waschflüssigkeitszufuhr von einer ebenfalls nicht dargestellten Hochdruckpumpe erfolgt hier über eine bewegliche Schlauchleitung 33, die in bekannter Weise so aufgehängt und in ihrer Länge dimensioniert ist, daß ihr mit der Tragvorrichtung 12 verbundenes Ende allen Bewegungen dieser Tragvorrichtung folgen kann.

Es sei ausdrücklich darauf hingewiesen, daß eine erfindungsgemäße Waschanlage nicht notwendigerweise die aus Säulen 3 und Querträgern 4 bestehenden Portale aufweisen muß. Vielmehr können die Schienen 10 bzw. 28 und 29 beispielsweise auch unmittelbar an der Decke oder anderen Teilen einer genügend großen, ansonsten aber beliebig gestalteten Waschhalle aufgehängt werden. Darüber hinaus können auch andere Trag- bzw. Stützkonstruktionen Verwendung finden.

Bei der in Fig. 1 dargestellten Ausführungsform ist es auch möglich, die Schiene 10 bzw. eine entsprechende Führungsvorrichtung, die Tragvorrichtung 12, den zentralen Verteiler 22 und die Leitungsanordnung 23 unter dem Boden 5 des Waschbereiches anzuordnen und den vertikalen Trägarm 14 durch einen entsprechend geformten Schlitz im Boden 5 nach oben herausragen zu lassen.

Bei beiden Ausführungsformen kann der horizontale Düsentragarm 18 z.B. dann weggelassen werden, wenn die Düsen im oberen Bereich des vertikalen Düsentragarmes 14 so ausgebildet sind, daß eine ausreichende Reinigung der Fahrzeug-Dachflächen gewährleistet ist.

**Ansprüche**

1. Bürstenlose Waschanlage für Fahrzeuge, insbesondere Kraftfahrzeuge, mit einer Düsenanordnung zum Aufspritzen von Waschflüssigkeit auf das Fahrzeug, die relativ zum Fahrzeug bewegbar ist und wenigstens eine vertikal angeordnete Düsenreihe umfaßt, dadurch **gekennzeichnet,** daß die vertikal angeordnete Düsenreihe so um das Fahrzeug herum bewegbar und dabei um eine vertikale Achse drehbar ist, daß mit ihr wenigstens eine Seitenfläche und wenigstens eine der vorderen und hinteren Stirnflächen des Fahrzeugs angespritzt werden können.

2. Bürstenlose Waschanlage nach Anspruch 1, dadurch **gekennzeichnet,** daß die Düsenanordnung eine vertikal angeordnete Düsenreihe umfaßt, die so um das Fahrzeug herum bewegbar und dabei um eine vertikale Achse drehbar ist, daß mit ihr beide Seitenflächen und die vordere und die hintere Stirnfläche des Fahrzeugs angespritzt werden können.

3. Bürstenlose Waschanlage nach einem der Ansprüche 1 oder 2, dadurch **gekennzeichnet,** daß für die vertikal angeordnete Düsenreihe eine Tragvorrichtung (12) vorgesehen ist, die in einer im wesentlichen horizontalen Ebene verschiebbar ist.

4. Bürstenlose Waschanlage nach Anspruch 3, dadurch **gekennzeichnet,** daß die Tragvorrichtung (12) in der im wesentlichen horizontalen Ebene längs einer fest montierten Schiene (10) auf einer zumindest nahezu geschlossenen Bewegungsbahn um das zu waschende Fahrzeug herum linear verschiebbar angeordnet ist.

5. Bürstenlose Waschanlage nach Anspruch 4, dadurch **gekennzeichnet,** daß die Düsenreihe an der Tragvorrichtung (12) drehfest befestigt ist.

6. Bürstenlose Waschanlage nach Anspruch 4 oder 5, dadurch **gekennzeichnet,** daß die Düsenreihe wenigstens zwei Düsengruppen umfaßt, von denen die eine für eine kleinere und die andere für eine größere Reinigungsweite ausgebildet ist.

7. Bürstenlose Waschanlage nach Anspruch 6, dadurch **gekennzeichnet,** daß die wenigstens zwei Düsengruppen alternierend mit Waschflüssigkeit versorgbar sind.

8. Bürstenlose Waschanlage nach Anspruch 6 oder 7, dadurch **gekennzeichnet,** daß die Düsen der Düsengruppe für die kleinere Reinigungsweite mit einem geringeren gegenseitigen vertikalen Abstand angeordnet sind als die Düsen der Düsengruppe für die größere Reinigungsweite.

9. Bürstenlose Waschanlage nach einem der Ansprüche 6 bis 8, dadurch **gekennzeichnet,** daß die Düsen der Düsengruppe für die kleinere Reinigungsweite einen Sprühkegel (17) mit einem größeren Öffnungswinkel aufweisen als die Düsen der Düsengruppe für die größere Reinigungsweite.

10. Bürstenlose Waschanlage nach einem der Ansprüche 6 bis 9, dadurch **gekennzeichnet,** daß die Düsen der Düsengruppe für die größere Reinigungsweite für eine größere Fördermenge von Waschflüssigkeit ausgelegt sind als die Düsen der Düsengruppe für die kleinere Reinigungsweite.

11. Bürstenlose Waschanlage nach einem der Ansprüche 6 bis 10, dadurch **gekennzeichnet,** daß zu waschende Fahrzeuge unterschiedlicher Länge für den Waschvorgang immer so angeordnet werden, daß ihre vordere Stirnfläche in etwa die gleiche Position in der Waschanlage einnimmt, daß eine Sensoranordnung vorgesehen ist, die die Länge des zu waschenden Fahrzeugs ermittelt, und daß anhand der ermittelten und gespeicherten Fahrzeuglänge die Waschflüssigkeitszufuhr von der Düsengruppe mit der kleinen Reinigungsweite auf die Düsengruppe mit der großen Reinigungsweite umgeschaltet wird, wenn bei der Umlaufbewegung der vertikal angeordneten Düsenreihe um das Fahrzeug der Abstand der Düsenreihe von der gerade zu reinigenden Fahrzeugoberfläche einen vorgegebenen Grenzwert zu überschreiten droht und umgekehrt.

12. Bürstenlose Waschanlage nach Anspruch 11, dadurch **gekennzeichnet,** daß die Umschaltung der Waschflüssigkeitszufuhr auf die Düsengruppe mit der großen Reinigungsweite bereits erfolgt, bevor der Abstand zwischen der vertikalen Düsenreihe und der zu reinigenden Fahrzeugoberfläche den vorgegebenen Grenzwert überschreitet und daß die Umschaltung der Waschflüssigkeitszufuhr auf die Düsengruppe mit der kleinen Reinigungsweite erst dann erfolgt, wenn der Abstand zwischen der vertikalen Düsenreihe und der zu reinigenden Fahrzeugoberfläche den vorgegebenen Grenzwert wieder unterschritten hat.

13. Bürstenlose Waschanlage nach Anspruch 3, dadurch **gekennzeichnet,** daß die Tragvorrichtung (12) in der im wesentlichen horizontalen Ebene mit zwei Freiheitsgraden (X, Y) linear verschiebbar angeordnet ist und bei jedem Waschvorgang in diesen beiden Freiheitsgraden (X, Y) so gesteuert wird, daß sie sich auf einer zumindest nahezu geschlossenen Bahn um das zu waschende Fahrzeug herum bewegt, und daß die Düsenreihe an der Tragvorrichtung (12) um eine vertikale Achse drehbar befestigt ist.

14. Bürstenlose Waschanlage nach Anspruch 13, dadurch **gekennzeichnet,** daß die Tragvorrichtung (12) linear verschiebbar auf wenigstens einer Schiene (25, 26) gelagert ist, die sich im wesentlichen quer zur Längsrichtung des zu waschenden Fahrzeugs erstreckt und die ihrerseits linear verschiebbar auf wenigstens einer Schiene (28, 29) gelagert ist, die sich im wesentlichen parallel zur Längsrichtung des zu waschenden Fahrzeuges erstreckt.

15. Bürstenlose Waschanlage nach einem der Ansprüche 3 bis 14, dadurch **gekennzeichnet,** daß die Tragvorrichtung (12) in einer über dem zu waschenden Fahrzeug befindlichen, im wesentlichen horizontalen Ebene verschiebbar ist.

16. Bürstenlose Waschanlage nach einem der vorhergehenden Ansprüche, dadurch **gekennzeichnet,** daß eine horizontal angeordnete Düsenreihe vorgesehen ist, die mit der vertikal angeordneten Düsenreihe mitbewegbar und um die vertikale Achse mitdrehbar ist und deren Spritzrichtung nach unten weist.

17. Bürstenlose Waschanlage nach Anspruch 16, dadurch **gekennzeichnet,** daß die horizontal angeordnete Düsenreihe wenigstens zwei Düsengruppen umfaßt, von denen die eine für eine kürzere und die andere für eine größere Reinigungsweite ausgebildet ist.

18. Bürstenlose Waschanlage nach Anspruch 17, dadurch **gekennzeichnet,** daß eine Sensoreinrichtung vorgesehen ist, die den Abstand der vertikal und/oder der horizontal angeordneten Düsenreihe von der gerade zu besprühenden Fahrzeugoberfläche mißt und daß in Abhängigkeit davon, ob der gemessene Abstand einen vorgegebenen Grenzwert über- oder unterschreitet, die Waschflüssigkeitszufuhr von der Düsengruppe mit der kleinen Reinigungsweite auf die Düsengruppe mit der großen Reinigungsweite oder umgekehrt umgeschaltet wird.

19. Bürstenlose Waschanlage nach einem der Ansprüche 4 oder 13, dadurch **gekennzeichnet,** daß die Tragvorrichtung (12) auf der nahezu beschlossenen Bewegungsbahn zuerst in der einen und dann in der entgegengesetzten Richtung um das zu waschende Fahrzeug herumgeführt wird.

20. Bürstenlose Waschanlage nach einem der Ansprüche 16 bis 18, dadurch **gekennzeichnet,** daß die vertikale Höhe der horizontal angeordneten Düsenreihe verstellbar ist, daß eine Sensoreinrichtung vorgesehen ist, durch die die vertikale Höhe der zumindest in etwa horizontal angeordneten Fahrzeugoberflächen bestimmt wird, und daß die vertikale Höhe der horizontal angeordneten Düsenreihe mit Hilfe der Meßergebnisse der Sensoreinrichtung an die vertikale Höhe der jeweils zu waschenden zumindest in etwa horizontal angeordneten Fahrzeugoberfläche angepaßt wird, um ein optimales Reinigungsergebnis zu erzielen.

Fig. 1

Fig. 2